(19) Europäisches Patentamt / European Patent Office / Office européen des brevets

(11) **EP 3 260 305 B1**

(12) **EUROPEAN PATENT SPECIFICATION**

(45) Date of publication and mention of the grant of the patent:
**13.03.2019 Bulletin 2019/11**

(21) Application number: **17175559.8**

(22) Date of filing: **12.06.2017**

(51) Int Cl.:
*B60C 1/00* *(2006.01)*      *C08L 9/06* *(2006.01)*
*B60C 19/08* *(2006.01)*     *B60C 11/00* *(2006.01)*
*C08K 3/04* *(2006.01)*      *C08K 3/06* *(2006.01)*
*C08K 3/22* *(2006.01)*      *C08K 3/36* *(2006.01)*
*C08K 5/09* *(2006.01)*      *C08K 5/18* *(2006.01)*
*C08K 5/47* *(2006.01)*      *C08K 5/548* *(2006.01)*
*C08L 9/00* *(2006.01)*      *C08L 91/00* *(2006.01)*
*C08L 91/06* *(2006.01)*     *C08K 5/31* *(2006.01)*

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 JP 2016123569**

(43) Date of publication of application:
**27.12.2017 Bulletin 2017/52**

(73) Proprietor: **Sumitomo Rubber Industries, Ltd. Kobe-shi, Hyogo-ken 651-0072 (JP)**

(72) Inventor: **IKEDA, Keiji Kobe-shi, Hyogo 651-0072 (JP)**

(74) Representative: **Manitz Finsterwald Patentanwälte PartmbB Martin-Greif-Strasse 1 80336 München (DE)**

(56) References cited:
**EP-A1- 0 847 880      EP-A1- 2 014 488
US-A1- 2009 114 321    US-A1- 2013 180 637
US-A1- 2014 326 386**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a pneumatic tire.

BACKGROUND ART

In view of environmental issues, recent high performance tires known as sports tires use silica formulations to simultaneously obtain excellent low heat build-up properties (fuel economy) and good wet grip performance. In conventional techniques, if a large amount of silica is incorporated into the high hardness tread rubbers of high performance tires, then there are difficulties in the kneading or extrusion processes. However, with the technological advances in chemicals, e.g. processing aids, and in machines, e.g. Banbury mixers or extruders, silica formulations with high hardness are now becoming mainstream even for high performance tires.

High performance tires are designed primarily for high speed running and some of them are used on racing circuits. During periods of continuous high-speed cornering, e.g. on a racing circuit, fracture phenomena called blowout, chipping, or chunking may occur due to the heat build-up in the tread rubber. However, the silica formulations, which produce less heat build-up, have another advantage in preventing such fracture phenomena.

However, unfortunately, it is well known that the use of silica formulations in tread rubbers impairs the conducting properties of the tires. One method to solve this problem is to place a conducting rubber layer (base pen) extending from the tread base to the ground contact surface. This method still has the risks of fracture phenomena in the tread rubber. Furthermore, since conducting rubber layers, which are components provided in elongated shapes inside tires, are usually processed and formed through a narrow extrusion orifice, it is also important to ensure processability for the unvulcanized rubbers.

US 2014/0326386 A1 discloses a rubber composition for an inner sidewall layer having a volume resistivity of not more than $5.0 \times 10^7$ Ω·cm.

SUMMARY OF INVENTION

TECHNICAL PROBLEM

The present invention aims to solve the above problems and provide a pneumatic tire that simultaneously achieves a cap tread with durability against rubber fracture and a conducting rubber with extrusion process passability (extrusion processability) while ensuring good conducting properties and good fuel economy.

SOLUTION TO PROBLEM

The present invention relates to a pneumatic tire, including: a cap tread; and a conducting rubber disposed to be exposed on a surface of the tread, the cap tread being formed of a rubber composition for cap treads that contains, per 100 parts by mass of a rubber component, 60 to 110 parts by mass of silica and 0.5 to 3.0 parts by mass of sulfur, the rubber composition for cap treads having, when vulcanized, a hardness of 68 or more and a tan δ at 30°C of 0.20 to 0.35, the conducting rubber being formed of a rubber composition for conducting rubbers that contains, per 100 parts by mass of a rubber component, 50 to 85 parts by mass of a fine particle carbon black having a nitrogen adsorption specific surface area of 105 $m^2$/g or more and 1.8 to 3.0 parts by mass of sulfur, the rubber composition for conducting rubbers having, when vulcanized, a hardness of 68 or more which has a difference from the hardness of the vulcanized rubber composition for cap treads of at most 2.0, wherein the hardness of the conducting rubber and of the tread rubber is measured at 25°C using a type A durometer in accordance with JIS K 6253-1.

The pneumatic tire preferably includes one or two conducting rubbers provided continuously in a circumferential direction of the tire and having a width of 0.1 to 2.5 mm in an axial direction of the tire.

ADVANTAGEOUS EFFECTS OF INVENTION

The pneumatic tire of the present invention includes a cap tread and a conducting rubber disposed to be exposed on the surface of the tread. The cap tread is formed of a rubber composition for cap treads that contains, per 100 parts by mass of a rubber component, 60 to 110 parts by mass of silica and 0.5 to 3.0 parts by mass of sulfur. The rubber composition for cap treads has, when vulcanized, a hardness of 68 or more and a tan δ at 30°C of 0.20 to 0.35. The conducting rubber is formed of a rubber composition for conducting rubbers that contains, per 100 parts by mass of a rubber component, 50 to 85 parts by mass of a fine particle carbon black having a nitrogen adsorption specific surface area of 105 m$^2$/g or more and 1.8 to 3.0 parts by mass of sulfur. The rubber composition for conducting rubbers has, when vulcanized, a hardness of 68 or more which has a difference from the hardness of the vulcanized rubber composition for cap treads of at most 2.0. Thus, it is possible to simultaneously achieve a cap tread with durability against rubber fracture and a conducting rubber with extrusion process passability (extrusion processability) while ensuring good conducting properties and good fuel economy.

BRIEF DESCRIPTION OF DRAWINGS

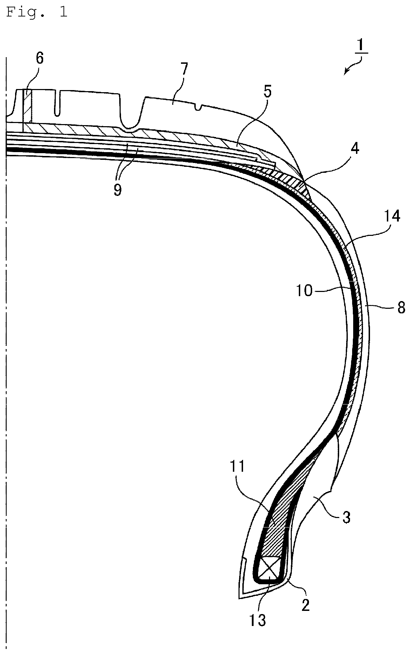

Fig. 1 illustrates the upper right half of a cross-sectional view of an example of a pneumatic tire of the present invention.

DESCRIPTION OF EMBODIMENTS

The pneumatic tire of the present invention includes a cap tread and a conducting rubber (also referred to as base pen) disposed to be exposed on the surface of the cap tread. The cap tread is formed of a rubber composition for cap treads that contains predetermined amounts of specific components and has, when vulcanized, predetermined hardness and tan δ. The conducting rubber is formed of a rubber composition for conducting rubbers that contains predetermined amounts of specific components and has, when vulcanized, a predetermined hardness which has a difference from the vulcanized rubber composition for cap treads of at most a predetermined value.

In the cases where a conducting rubber is provided with a high hardness cap tread containing silica, fracture phenomena such as blowout, chipping, or chunking may occur. In contrast, the tire of the present invention includes a cap tread containing predetermined amounts of silica and sulfur and having a high hardness and other physical properties, and further includes a conducting rubber containing predetermined amounts of a specific fine particle carbon black and sulfur and having a predetermined hardness which is adjusted to have a difference from the hardness of the cap tread of at most a predetermined value. Such a tire has an excellent balance between the cap tread's durability against rubber fracture and the conducting rubber's extrusion process passability (extrusion processability).

Specifically, when a conducting rubber is adjusted to have a hardness similar to that of a high hardness cap tread for use in high performance tires or other tires, the movement/deformation of the cap tread adjacent to the conducting rubber can be suppressed, thereby reducing the heat build-up in the cap tread. Thus, the present invention can prevent fracture phenomena resulting from an increase in heat build-up, such as blowout, chipping, and chunking, thereby achieving good durability against rubber fracture.

Moreover, the hardness of vulcanized rubbers and the extrusion process passability (Mooney viscosity) of unvulcanized rubbers are generally in a trade-off relationship. Since conducting rubbers require extrusion process passability during extrusion through a narrow extrusion orifice as mentioned earlier, they need to be designed to have a low Mooney viscosity before vulcanization. Accordingly, in the case of a conducting rubber having a high hardness similar to that of a high hardness cap tread containing predetermined amounts of silica and sulfur, it is difficult to ensure a low Mooney viscosity. In contrast, the present invention can provide not only a high hardness but also a low Mooney viscosity to a conducting rubber by designing it to contain a small amount of a fine particle carbon black with a predetermined specific surface area and an increased amount of sulfur.

Additionally, the conducting rubber and the silica-containing cap tread in the present invention are also excellent in conducting properties and fuel economy, respectively. Thus, the pneumatic tire of the present invention has been completed based on the following technical idea: the conducting rubber of a tire including a conducting rubber and a cap tread with good conducting properties and fuel economy, respectively, is further adjusted to have a hardness similar to that of the high hardness cap tread so that the movement/deformation of the cap tread is suppressed to produce less heat build-up, thereby preventing fracture phenomena. At the same time, the conducting rubber is adjusted to contain a small amount of fine particle carbon black and a large amount of sulfur to provide not only a high hardness but also a low Mooney viscosity to the rubber, whereby the above-described effects of the present invention can be achieved. Thus, according to the present invention, it is possible to simultaneously achieve a cap tread with durability against rubber fracture and a conducting rubber with extrusion process passability (extrusion processability) while ensuring good conducting properties and good fuel economy.

An example of a pneumatic tire of the present invention will be described below with reference to a drawing.

<Basic structure>

The pneumatic tire of the present invention has a structure as illustrated in, for example, the upper right half of a cross-section of a tire shown in Fig. 1. The pneumatic tire 1 includes a tread rubber 7 forming a tread, a sidewall rubber 8 forming each of a pair of sidewalls extending inwardly from each end of the tread rubber 7 in the radial direction of the pneumatic tire 1, a clinch rubber 3 forming a clinch located at the inner end of each sidewall, and a chafer rubber 2 forming a chafer located on the top of a rim. A carcass 10 is also provided to extend between the clinches or chafers. Moreover, a breaker rubber 9 forming a breaker is disposed radially outwardly of the carcass 10 in the pneumatic tire 1. The carcass 10 is composed of at least one carcass ply having carcass cords arranged therein. The carcass ply is provided extending from the tread via the sidewall and then turned up around a bead core 13 and a bead apex 11 extending from the upper end of the bead core 13 toward the sidewall, from the inside to the outside in the axial direction of the pneumatic tire 1, and finally anchored by the turn-up. The breaker is composed of two or more breaker plies having breaker cords arranged therein. The breaker cords are stacked in different orientations to cross the breaker cords in one breaker ply with another breaker ply. For example, the pneumatic tire 1 of the present invention has, but not limited to, the following structure: a covering rubber (undertread) 5 for covering the upper side of the breaker is provided between the tread (tread rubber 7, base tread) and the breaker; a cushion rubber 4 is disposed between the carcass ply and the sidewall or each end of the breaker while having an area in contact with the covering rubber 5; a conducting rubber 6 is disposed in the tread rubber 7 to be in contact with the covering rubber 5 and also to be partially exposed on the ground contact surface (tread); an inner sidewall layer rubber 14 is disposed between the carcass 10 and the sidewall rubber 8 while having an area in contact with the cushion rubber 4, and extending at least from the cushion rubber 4 to the position in contact with the clinch rubber 3 or chafer rubber 2; and the conducting rubber 6, the covering rubber 5, the cushion rubber 4, the inner sidewall layer rubber 14, and the clinch rubber 3 or chafer rubber 2 are electrically connected in the pneumatic tire 1.

With the above-described structure or other similar structures, the static electricity generated in the bead rubber (clinch rubber, chafer rubber) in the area in contact with the rim, or at the ground contact area during running of the pneumatic tire can be released outside the pneumatic tire through the electrically connected conductive rubber components in the pneumatic tire. Therefore, even when the tread rubber or other components contain silica, the pneumatic tire has low electrical resistance.

In view of durability against rubber fracture, extrusion process passability of the conducting rubber, and other properties, the tire preferably includes one or two conducting rubbers provided continuously in the circumferential direction of the tire. From the same standpoints, the conducting rubber (s) preferably has a width of 0.1 to 2.5 mm in the axial direction of the tire.

The rubber compositions used to form the cap tread and the conducting rubber, respectively, in the tire will be described below.

<Rubber composition for cap treads>

Non-limiting examples of rubber materials that can be used in the rubber component of the rubber composition for cap treads include diene rubbers such as natural rubber (NR), epoxidized natural rubber (ENR), and synthetic diene rubbers, including polyisoprene rubber (IR), polybutadiene rubber (BR), styrene-butadiene rubber (SBR), styrene-isoprene-butadiene rubber (SIBR), chloroprene rubber (CR), acrylonitrile butadiene rubber (NBR), ethylene-propylene-diene rubber (EPDM), butyl rubber (IIR), and halogenated butyl rubber (X-IIR). In order to obtain good grip performance and other properties, SBR is preferred among these, with a combination of SBR and BR being more preferred.

Any SBR may be used including, for example, emulsion polymerized styrene-butadiene rubber (E-SBR) and solution polymerized styrene-butadiene rubber (S-SBR).

The SBR preferably has a styrene content of 20% by mass or more, more preferably 23% by mass or more. When the styrene content is less than 20% by mass, sufficient grip performance tends not to be obtained. The styrene content of the SBR is also preferably 60% by mass or less, more preferably 50% by mass or less. When the styrene content is more than 60% by mass, durability tends to decrease.

The styrene content of SBR as used herein is determined by $^1$H-NMR analysis.

In the case where the rubber component includes SBR, the amount of SBR based on 100% by mass of the rubber component is preferably 50% by mass or more, more preferably 70% by mass or more. The amount of SBR is preferably 95% by mass or less, more preferably 90% by mass or less. When the amount of SBR falls within the range indicated above, the effects of the present invention can be suitably achieved.

Any BR may be used including, for example, high cis BR such as BR1220 available from Zeon Corporation, BR130B and BR150B both available from Ube Industries, Ltd., and JSR BR51, T700, and BR730 all available from JSR Corporation; low cis BR such as BR1250H available from Zeon Corporation; and syndiotactic polybutadiene crystal-containing BR such as VCR412 and VCR617 both available from Ube Industries, Ltd.

In the case where the rubber component includes BR, the amount of BR based on 100% by mass of the rubber component is preferably 5% by mass or more, more preferably 10% by mass or more. The amount of BR is preferably 50% by mass or less, more preferably 30% by mass or less. When the amount of BR falls within the range indicated above, the effects of the present invention can be suitably achieved.

The rubber composition for cap treads contains silica. Any silica may be used, including those produced by wet or dry processes.

The silica preferably has a nitrogen adsorption specific surface area (determined by the BET method) falling within the range of, for example, 50 to 300 $m^2/g$ or even 70 to 250 $m^2/g$. The nitrogen adsorption specific surface area of silica as used herein is measured by the BET method in conformity with ASTM D3037-81.

The amount of silica per 100 parts by mass of the rubber component is 60 parts by mass or more, preferably 70 parts by mass or more. When the amount is less than 60 parts by mass, a lowered hardness or reduced grip performance may be obtained. The amount of silica is 110 parts by mass or less, preferably 90 parts by mass or less. When the amount is more than 110 parts by mass, fuel economy may decrease.

In the case where the rubber composition contains silica, it preferably contains a silane coupling agent together with silica. The silane coupling agent may be any silane coupling agent conventionally used in combination with silica in the rubber industry. Examples include sulfide silane coupling agents such as bis(3-triethoxysilylpropyl)tetrasulfide; mercapto silane coupling agents such as 3-mercaptopropyltrimethoxysilane; vinyl silane coupling agents such as vinyltriethoxysilane; and amino silane coupling agents such as 3-aminopropyltriethoxysilane. Among these, sulfide silane coupling agents are preferred. The amount of the silane coupling agent per 100 parts by mass of silica is preferably 5 to 15 parts by mass.

The rubber composition for cap treads preferably contains carbon black in order to obtain a high hardness and other properties.

The carbon black preferably has a nitrogen adsorption specific surface area ($N_2SA$) of 100 $m^2/g$ or more, more preferably 125 $m^2/g$ or more. When the $N_2SA$ is less than 100 $m^2/g$, hardness tends to decrease. The $N_2SA$ is preferably 200 $m^2/g$ or less, more preferably 175 $m^2/g$ or less. Carbon black having a $N_2SA$ of more than 200 $m^2/g$ is less likely to disperse well, with the result that desired properties may not be obtained. The nitrogen adsorption specific surface area of carbon black as used herein is determined in accordance with JIS K 6217-2:2001.

The amount of carbon black per 100 parts by mass of the rubber component is preferably 2 parts by mass or more, more preferably 5 parts by mass or more. When the amount is less than the lower limit, hardness may decrease. The amount of carbon black is preferably 20 parts by mass or less, more preferably 15 parts by mass or less. When the amount is more than the upper limit, tan $\delta$ (rolling resistance properties) tends to deteriorate.

The rubber composition for cap treads contains sulfur. Examples of the sulfur include powdered sulfur, precipitated sulfur, colloidal sulfur, insoluble sulfur, and highly dispersible sulfur.

The amount of sulfur per 100 parts by mass of the rubber component is 0.5 parts by mass or more, preferably 1.0 part by mass or more, more preferably 2.0 parts by mass or more. When the amount is less than 0.5 parts by mass, hardness may decrease. The amount of sulfur is 3.0 parts by mass or less, preferably 2.8 parts by mass or less. When the amount is more than 3.0 parts by mass, fracture phenomena may occur in the tread.

The rubber composition for cap treads preferably contains a vulcanization accelerator. Examples of the vulcanization accelerator include thiazole vulcanization accelerators such as 2-mercaptobenzothiazole, di-2-benzothiazolyl disulfide, and N-cyclohexyl-2-benzothiazolylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazolesulfenamide, N-t-butyl-2-benzothiazolylsulfenamide, N-oxyethylene-2-benzothiazolesulfenamide, and N,N'-diisopropyl-2-benzothiazolesulfenamide; and guanidine vulcanization accelerators such as diphenylguanidine, diorthotolylguanidine, and orthotolylbiguanidine. In order to more suitably achieve the effects of the present invention, sulfenamide vulcanization accelerators or guanidine vulcanization accelerators are preferred among these.

The amount of the vulcanization accelerator per 100 parts by mass of the rubber component is preferably 1.0 part by mass or more, more preferably 3.0 parts by mass or more, still more preferably 3.5 parts by mass or more, but preferably 10 parts by mass or less, more preferably 7.0 parts by mass or less, still more preferably 5.0 parts by mass or less.

The rubber composition for cap treads has, when vulcanized, a hardness of 68 or more, preferably 70 or more. If the hardness is less than 68, the tire tends not to ensure sufficient cornering power, thereby resulting in deterioration of the dynamic behavior (e.g. handling stability) of the tire. The upper limit of the hardness of the vulcanizate is not particularly limited, but is preferably 78 or less, more preferably 75 or less, still more preferably 73 or less.

The hardness of the vulcanizate as used herein can be measured by the method described later in EXAMPLES.

The hardness of the vulcanizate can be controlled, for example, by adjusting the amount of carbon black, sulfur, vulcanization accelerator, softener (e.g. oil), or other components, or by using a carbon black having a different particle size. Specifically, the hardness of the vulcanizate may be increased, for example, by increasing the amount of carbon black, sulfur, or vulcanization accelerator, or by reducing the amount of the softener, or by using a carbon black having a smaller particle size. The hardness can be controlled based on such tendencies.

The rubber composition for cap treads has, when vulcanized, a tan $\delta$ determined at 30°C of 0.20 to 0.35, preferably 0.23 to 0.32, more preferably 0.25 to 0.30. If the tan $\delta$ is less than 0.20, insufficient grip performance tends to be obtained. If the tan $\delta$ is more than 0.35, fuel economy tends to deteriorate.

The tan $\delta$ determined at 30°C of the vulcanizate is determined by the method described later in EXAMPLES.

The tan $\delta$ of the vulcanizate can be controlled, for example, by adjusting the amount of carbon black or sulfur, or by using a carbon black having a different particle size. Specifically, the tan $\delta$ may be reduced, for example, by reducing the amount of carbon black, or by increasing the amount of sulfur, or by using a carbon black having a larger particle size. The tan $\delta$ can be controlled based on such tendencies.

<Rubber composition for conducting rubbers>

The conducting rubber is embedded in the tread so that it is partially exposed on the ground contact surface of the tire, while another part of the conducting rubber is connected to conductive rubbers to effectively release to the ground contact surface the static electricity generated during running of the pneumatic tire. Specific examples of the conducting rubber are illustrated in, for example, Fig. 1 of the present application and Fig. 1 of JP 2944908 B, which is included herein by reference.

Examples of rubber materials that can be used in the rubber component of the rubber composition for conductive rubbers include, but not limited to, those as mentioned above. In particular, in view of the effects of the present invention, the same type of rubber material as that in the tread is preferably used. Accordingly, SBR is preferred, with a combination of SBR and BR being more preferred.

The SBR may be as described above, and the suitable range of styrene content thereof may also be as described above.

In the case where the rubber component includes SBR, the amount of SBR based on 100% by mass of the rubber component is preferably 50% by mass or more, more preferably 70% by mass or more. The amount of SBR is preferably 95% by mass or less, more preferably 90% by mass or less. When the amount of SBR falls within the range indicated above, the effects of the present invention can be suitably achieved.

The BR may be as described above.

In the case where the rubber component includes BR, the amount of BR based on 100% by mass of the rubber component is preferably 5% by mass or more, more preferably 10% by mass or more. The amount of BR is preferably 50% by mass or less, more preferably 30% by mass or less. When the amount of BR falls within the range indicated above, the effects of the present invention can be suitably achieved.

The rubber composition for conducting rubbers contains a fine particle carbon black having a nitrogen adsorption specific surface area of 105 $m^2/g$ or more. This ensures a high hardness so that the effects of the present invention can be well achieved. Examples of such a carbon black include ISAF and SAF.

The fine particle carbon black has a nitrogen adsorption specific surface area ($N_2SA$) of 105 $m^2/g$ or more, preferably 110 $m^2/g$ or more, more preferably 120 $m^2/g$ or more. Carbon black having a $N_2SA$ of less than the lower limit may provide reduced hardness or low reinforcing properties, thereby resulting in deterioration of durability during running on racing circuits. The upper limit of the $N_2SA$ is not particularly limited, but is preferably 300 $m^2/g$ or less, more preferably 200 $m^2/g$ or less. Carbon black having a $N_2SA$ of more than the upper limit is less likely to disperse well, with the result that desired properties may not be obtained.

The amount of the fine particle carbon black per 100 parts by mass of the rubber component is 50 parts by mass or more, preferably 60 parts by mass or more. When the amount is less than the lower limit, the rubber composition may have low conducting properties, failing to function as a conducting rubber (base pen). The amount of the fine particle carbon black is 85 parts by mass or less, preferably 80 parts by mass or less. An amount of more than the upper limit tends to make it difficult to design the rubber composition to have a low Mooney viscosity.

The rubber composition for conducting rubbers contains sulfur. The sulfur may be as described above.

The amount of sulfur per 100 parts by mass of the rubber component is 1.8 parts by mass or more, preferably 1.9 parts by mass or more. With less than 1.8 parts by mass of sulfur, it tends to be difficult to simultaneously achieve a high hardness and a low Mooney viscosity. The amount of sulfur is 3.0 parts by mass or less, preferably 2.5 parts by mass or less, still more preferably 2.3 parts by mass or less. When the amount is more than 3.0 parts by mass, the conducting rubber itself may break during running of the tire, due to reduced flex resistance.

The rubber composition for conducting rubbers preferably contains a vulcanization accelerator. The vulcanization accelerators may be as described above. In order to more suitably achieve the effects of the present invention, sulfenamide vulcanization accelerators, among others, are preferred.

The amount of the vulcanization accelerator per 100 parts by mass of the rubber component is preferably 0.1 parts by mass or more, more preferably 0.3 parts by mass or more, still more preferably 0.5 parts by mass or more, but preferably 10 parts by mass or less, more preferably 3.0 parts by mass or less, still more preferably 2.0 parts by mass or less.

The rubber composition for conducting rubbers has, when vulcanized, a hardness of 68 or more, preferably 70 or more. If the hardness is less than 68, the tire tends not to ensure sufficient cornering power, thereby resulting in deterioration of the dynamic behavior (e.g. handling stability) of the tire. The upper limit of the hardness of the vulcanizate is not particularly limited, but is preferably 78 or less, more preferably 75 or less, still more preferably 73 or less.

Further, the difference of the hardnesses of the vulcanized rubber composition for conducting rubbers and the vulcanized rubber composition for cap treads is at most 2.0. This provides effects such as prevention of fracture phenomena. The difference is preferably at most 1.5, more preferably at most 1.0.

The hardness of the vulcanizate can be controlled, for example, by adjusting the amount of carbon black, sulfur, vulcanization accelerator, softener (e.g. oil), or other components, or by using a carbon black having a different particle size. Specifically, the hardness of the vulcanizate may be increased, for example, by increasing the amount of carbon black, sulfur, or vulcanization accelerator, or by reducing the amount of the softener, or by using a carbon black having a smaller particle size. The hardness can be controlled based on such tendencies.

In addition to the above components, the rubber compositions for cap treads and for conducting rubbers may appropriately contain other compounding agents commonly used in the preparation of rubber compositions, such as other reinforcing fillers, zinc oxide, stearic acid, various types of antioxidants, tackifiers, and waxes.

The rubber compositions for cap treads and for conducting rubbers can be prepared by conventional methods. Specifically, for example, they may be prepared by kneading the components using a Banbury mixer, a kneader, an open roll mill, or other kneading machines, followed by vulcanization.

The pneumatic tire of the present invention can be produced by usual methods using the rubber compositions for cap treads and for conducting rubbers. Specifically, the unvulcanized rubber compositions containing the components described above are extruded and processed into the shapes of a tread and a conducting rubber, respectively, assembled with other tire components on a tire building machine in a usual manner to build an unvulcanized tire. The unvulcanized tire is heated and pressurized in a vulcanizer to produce a tire.

The pneumatic tire of the present invention can be suitably used as a tire for passenger vehicles, trucks and buses, or two-wheeled vehicles, a high performance tire, or other tires. The pneumatic tire obtained according to the present invention shows good ground contact properties and good antistatic properties for a long period of time. The term "high performance tire" includes tires for racing purposes (racing tires) for use in racing vehicles.

EXAMPLES

The present invention is specifically described with reference to, but not limited to, examples below.

The chemicals used in the examples and comparative examples are listed below.

(Materials)

SBR1502: SBR1502 (styrene content: 23.5% by mass) available from JSR Corporation
SBR3830: Tufdene 3830 (styrene content: 33% by mass, oil content: 37.5 parts by mass per 100 parts by mass of rubber solids) available from Asahi Kasei Corporation
BR: BR150B available from Ube Industries, Ltd.
Carbon black N220: SHOBLACK N220 ($N_2SA$: 125 m$^2$/g) available from Cabot Japan K.K.
Carbon black N110: Diablack N110 ($N_2SA$: 142 m$^2$/g) available from Mitsubishi Chemical Corporation
Carbon black N330 : SHOBLACK N330 ($N_2SA$: 75 m$^2$/g) available from Cabot Japan K.K.
Silica VN3: ULTRASIL VN3 ($N_2SA$: 175 m$^2$/g) available from Degussa
Silane coupling agent Si69: Si69 (bis(3-triethoxysilylpropyl)tetrasulfide) available from Degussa
Oil: Diana Process oil AH-24 available from Idemitsu Kosan Co., Ltd.
Wax: Ozoace 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.
Stearic acid: stearic acid available from NOF Corporation
Zinc oxide: Zinc oxide #1 available from Mitsui Mining & Smelting Co., Ltd.
Sulfur: powdered sulfur available from Tsurumi Chemical Industry Co., Ltd.
Vulcanization accelerator TBBS: NOCCELER NS (N-tert-butyl-2-benzothiazolylsulfenamide) available from Ouchi Shinko Chemical Industrial Co., Ltd.
Vulcanization accelerator CZ: NOCCELER CZ (N-cyclohexyl-2-benzothiazolylsulfenamide) available from Ouchi Shinko Chemical Industrial Co., Ltd.
Vulcanization accelerator DPG: NOCCELER D (N,N'-diphenylguanidine) available from Ouchi Shinko Chemical Industrial Co., Ltd.

<Preparation of conducting rubber and tread rubber>

The components listed in Table 1 or Table 2, excluding the sulfur and vulcanization accelerator(s), were kneaded using a Banbury internal mixer at 150°C for five minutes. To the kneadate was added the sulfur and vulcanization accelerator(s), and they were kneaded using an open roll mill at 80 °C for three minutes to give an unvulcanized rubber composition for conducting rubbers or an unvulcanized rubber composition for treads.

The unvulcanized rubber compositions were vulcanized to give vulcanized rubber compositions.

<Preparation of test tire>

The prepared rubber compositions with the formulations shown in Tables 1 and 2 were used as conducting rubbers and tread rubbers, respectively, which were combined as shown in Table 3, followed by vulcanization by a usual method to prepare 215/55R16 test tires having the structure shown in Fig. 1. The conducting rubbers had a shape as shown in JP 2944908 B. Each conducting rubber had a width of 2.0 mm and was provided continuously in the tire circumferential direction (one conducting rubber extending in the tire circumferential direction).

The prepared unvulcanized rubber compositions, vulcanized rubber compositions, and test tires were evaluated on the following items. Tables 1 to 3 show the results.

(Mooney viscosity)

The Mooney viscosity of each unvulcanized rubber composition (conducting rubber) was measured at 100°C in accordance with JIS K 6300. The values are expressed as an index using the equation below, with the reference formulation example (Comparative Formulation 1-1) set equal to 100. A higher index indicates a lower viscosity, which means better extrusion process passability (extrusion processability).

$$\text{(Mooney viscosity index)} = \text{(Mooney viscosity of reference formulation example)} / \text{(Mooney viscosity of each formulation example)} \times 100$$

(Hardness (25°C))

The hardness of each vulcanized rubber composition (conducting rubber or tread rubber) at 25°C was measured using a type A durometer in accordance with JIS K 6253-1: "Rubber, vulcanized or thermoplastic - Determination of hardness". A larger value indicates a higher hardness.

(tan $\delta$ (30°C))

The loss tangent (tan $\delta$) of each vulcanized rubber composition (tread rubber) was measured at a temperature of 30°C, a frequency of 10 Hz, an initial strain of 10%, and a dynamic strain of 2% using a viscoelastic spectrometer VES available from Iwamoto Seisakusho Co., Ltd. A smaller value indicates a smaller rolling resistance, which means better fuel economy.

(Flex fatigue resistance)

Specimens prepared from each vulcanized rubber composition (conducting rubber) in accordance with JIS K 6260 were subjected to a flex crack growth test. The test conditions included 500,000 repeated cycles of bending the specimens. Thereafter, the degree of cracking was graded. A lower grade indicates better flex fatigue resistance.

(Fracture resistance of tread rubber)

Each test tire was run at 280 km/h continuously for one hour according to a high-speed drum durability test. The appearance of the tread was observed for damage and evaluated based on the following criteria.

5: No rubber fracture is observed.
4: Partial rubber fracture is observed.
3, 2, 1: The number of rubber fracture points further increases in this order.

[Table 1]

Conducting rubber

| | | Formulation | | | | Comparative formulation | | | | | | |
|---|---|---|---|---|---|---|---|---|---|---|---|---|
| | | 1-1 | 1-2 | 1-3 | 1-4 | 1-1 | 1-2 | 1-3 | 1-4 | 1-5 | 1-6 | 1-7 |
| Formulation (parts by mass) | SBR1502 | 80 | 80 | 80 | 80 | 80 | 80 | 80 | 80 | 80 | 80 | 80 |
| | BR | 20 | 20 | 20 | 20 | 20 | 20 | 20 | 20 | 20 | 20 | 20 |
| | Carbon black N220 | 70 | 60 | — | 75 | 70 | 70 | 45 | 90 | 45 | 90 | — |
| | Carbon black N110 | — | — | 70 | — | — | — | — | — | — | — | — |
| | Carbon black N330 | — | — | — | — | — | — | — | — | — | — | 70 |
| | Oil | 20 | 20 | 20 | 28 | 20 | 20 | 20 | 20 | 5 | 35 | 20 |
| | Wax | 2 | 2 | 2 | 2 | 2 | 2 | 2 | 2 | 2 | 2 | 2 |
| | Antioxidant | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 |
| | Sulfur | 2.0 | 3.0 | 2.0 | 2.0 | 1.0 | 3.5 | 2.0 | 2.0 | 2.0 | 2.0 | 2.0 |
| | Vulcanization accelerator TBBS | 1.0 | 1.5 | 1.5 | 1.5 | 1.0 | 1.0 | 1.0 | 1.0 | 1.0 | 1.0 | 1.0 |
| Evaluation | Mooney viscosity (100℃) | 100 | 108 | 98 | 96 | 100 | 103 | 120 | 87 | 105 | 88 | 115 |
| | Hardness (25℃) | 70 | 70 | 72 | 70 | 63 | 66 | 55 | 82 | 63 | 69 | 54 |
| | Flex fatigue resistance | 1 | 1 | 1 | 1 | 1 | 1 | 1 | 4 | 2 | 2 | 2 |

[Table 2]

Tread rubber

| | | Formulation | | | | | Comparative formulation | | | |
|---|---|---|---|---|---|---|---|---|---|---|
| | | 2-1 | 2-2 | 2-3 | 2-4 | 2-5 | 2-1 | 2-2 | 2-3 | 2-4 |
| Formulation (parts by mass) | SBR3830 | 104.5 | 104.5 | 104.5 | 104.5 | 104.5 | 104.5 | 104.5 | 104.5 | 104.5 |
| | BR | 24 | 24 | 24 | 24 | 24 | 24 | 24 | 24 | 24 |
| | Carbon black N110 | 10 | 10 | 10 | 10 | 20 | 10 | 10 | 10 | 10 |
| | Silica VN3 | 90 | 85 | 90 | 90 | 70 | 40 | 150 | 90 | 90 |
| | Silane coupling agent Si69 | 7.2 | 6.8 | 7.2 | 7.2 | 5.6 | 3.2 | 12 | 7.2 | 7.2 |
| | Oil | 10 | 10 | 10 | 10 | 0 | 10 | 10 | 10 | 10 |
| | Wax | 2 | 2 | 2 | 2 | 2 | 2 | 2 | 2 | 2 |
| | Antioxidant | 2 | 2 | 2 | 2 | 2 | 2 | 2 | 2 | 2 |
| | Stearic acid | 2 | 2 | 2 | 2 | 2 | 2 | 2 | 2 | 2 |
| | Zinc oxide | 2 | 2 | 2 | 2 | 2 | 2 | 2 | 2 | 2 |
| | Sulfur | 1.8 | 1.8 | 1.0 | 2.5 | 1.8 | 1.8 | 1.8 | 0.2 | 3.5 |
| | Vulcanization accelerator CZ | 2.0 | 2.0 | 2.0 | 2.0 | 2.0 | 2.0 | 2.0 | 2.0 | 2.0 |
| | Vulcanization accelerator DPG | 2.0 | 2.0 | 2.0 | 2.0 | 2.0 | 2.0 | 2.0 | 2.0 | 2.0 |
| Evaluation | Hardness (25℃) | 70 | 68 | 68 | 72 | 70 | 58 | 80 | 60 | 76 |
| | tan δ (30℃) | 0.30 | 0.27 | 0.32 | 0.25 | 0.27 | 0.18 | 0.42 | 0.35 | 0.20 |

[Table 3]

Test tire

| | Example | | | | | | | | | | | | | | | |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| Conducting rubber | Formulation 1-1 | Formulation 1-1 | Formulation 1-1 | Formulation 1-1 | Formulation 1-2 | Formulation 1-3 | Formulation 1-2 | Formulation 1-2 | Formulation 1-2 | Formulation 1-3 | Formulation 1-4 | Formulation 1-4 | Formulation 1-4 | Formulation 1-1 | Formulation 1-2 | Formulation 1-3 |
| Tread rubber | Formulation 2-1 | Formulation 2-2 | Formulation 2-3 | Formulation 2-4 | Formulation 2-1 | Formulation 2-1 | Formulation 2-2 | Formulation 2-3 | Formulation 2-4 | Formulation 2-4 | Formulation 2-1 | Formulation 2-2 | Formulation 2-4 | Formulation 2-5 | Formulation 2-5 | Formulation 2-5 |
| Difference of hardnesses of conducting rubber and tread rubber | 0 | 2 | 2 | 2 | 0 | 2 | 2 | 2 | 2 | 2 | 0 | 2 | 2 | 0 | 0 | 2 |
| Fracture resistance of tread rubber | 5 | 5 | 5 | 5 | 5 | 5 | 5 | 5 | 5 | 5 | 5 | 5 | 5 | 5 | 5 | 5 |

| | Comparative Example | | | | | | | | | |
|---|---|---|---|---|---|---|---|---|---|---|
| | 1 | 2 | 3 | 4 | 5 | 6 | 7 | 8 | 9 | 10 |
| Conducting rubber | Comparative formulation 1-1 | Comparative formulation 1-1 | Comparative formulation 1-1 | Comparative formulation 1-1 | Comparative formulation 1-2 | Comparative formulation 1-3 | Comparative formulation 1-4 | Comparative formulation 1-5 | Comparative formulation 1-6 | Comparative formulation 1-7 |
| Tread rubber | Comparative formulation 2-1 | Comparative formulation 2-2 | Comparative formulation 2-3 | Comparative formulation 2-4 | Comparative formulation 2-1 | Comparative formulation 2-1 | Comparative formulation 2-1 | Comparative formulation 2-1 | Comparative formulation 2-1 | Comparative formulation 2-1 |
| Difference of hardnesses of conducting rubber and tread rubber | 5 | 17 | 3 | 13 | 8 | 3 | 24 | 5 | 11 | 4 |
| Fracture resistance of tread rubber | 3 | 2 | 3 | 2 | 2 | 3 | 1 | 3 | 2 | 3 |

Table 3 demonstrates that a cap tread with fracture resistance (durability against rubber fracture) and a conducting rubber with extrusion process passability (Mooney viscosity) were simultaneously achieved in the examples in which the tire included a cap tread and a conducting rubber (also referred to as base pen) disposed to be exposed on the surface of the cap tread; the cap tread was formed of a rubber composition for cap treads that contained predetermined amounts of specific components and had, when vulcanized, predetermined hardness and tan $\delta$; and the conducting rubber was formed of a rubber composition for conducting rubbers that contained predetermined amounts of specific components and had, when vulcanized, a predetermined hardness having a difference from the hardness of the vulcanized rubber composition for cap treads of at most a predetermined value. In contrast, the tires of the comparative examples which did not fall within the above ranges exhibited inferior properties. Furthermore, the tires of the examples were also excellent in conducting properties and fuel economy.

REFERENCE SIGNS LIST

1    pneumatic tire
2    chafer rubber
3    clinch rubber
4    cushion rubber
5    covering rubber
6    conducting rubber
7    tread rubber
8    sidewall rubber
9    breaker rubber
10    carcass
11    bead apex
13    bead core
14    inner sidewall layer rubber

**Claims**

1. A pneumatic tire, comprising:

    a cap tread; and
    a conducting rubber disposed to be exposed on a surface of the tread,

the cap tread being formed of a rubber composition for cap treads that comprises, per 100 parts by mass of a rubber component, 60 to 110 parts by mass of silica and 0.5 to 3.0 parts by mass of sulfur,

the rubber composition for cap treads having, when vulcanized, a hardness of 68 or more and a tan $\delta$ at 30°C of 0.20 to 0.35,

the conducting rubber being formed of a rubber composition for conducting rubbers that comprises, per 100 parts by mass of a rubber component, 50 to 85 parts by mass of a fine particle carbon black having a nitrogen adsorption specific surface area of 105 m$^2$/g or more and 1.8 to 3.0 parts by mass of sulfur,

the rubber composition for conducting rubbers having, when vulcanized, a hardness of 68 or more which has a difference from the hardness of the vulcanized rubber composition for cap treads of at most 2.0, wherein

the hardness of the conducting rubber and of the tread rubber is measured at 25°C using a type A durometer in accordance with JIS K 6253-1.

2. The pneumatic tire according to claim 1,
wherein the pneumatic tire comprises one or two conducting rubbers provided continuously in a circumferential direction of the tire and having a width of 0.1 to 2.5 mm in an axial direction of the tire.

**Patentansprüche**

1. Luftreifen, umfassend:

eine Decklauffläche; und

einen leitenden Gummi, der so angeordnet ist, dass er auf einer Oberfläche der Lauffläche freiliegt,

wobei die Decklauffläche aus einer Kautschukmischung für Decklaufflächen gebildet ist, die pro 100 Massenteile einer Kautschukkomponente 60 bis 110 Massenteile Siliciumdioxid und 0,5 bis 3,0 Massenteile Schwefel umfasst,

wobei die Kautschukzusammensetzung für Decklaufflächen, wenn sie vulkanisiert ist, eine Härte von 68 oder mehr und einen tan $\delta$ bei 30°C von 0,20 bis 0,35 aufweist,

wobei der leitende Gummi aus einer Kautschukzusammensetzung für leitende Gummis gebildet ist, die pro 100 Massenteile einer Kautschukkomponente 50 bis 85 Massenteile eines feinteiligen Rußes mit einer spezifischen Stickstoffadsorptionsoberfläche von 105 m$^2$/g oder mehr und 1,8 bis 3,0 Massenteile Schwefel umfasst,

wobei die Kautschukzusammensetzung für leitende Gummis, wenn sie vulkanisiert ist, eine Härte von 68 oder mehr aufweist, die sich von der Härte der vulkanisierten Kautschukzusammensetzung für Decklaufflächen von höchstens 2,0 unterscheidet, wobei

die Härte des leitenden Gummis und des Laufflächengummis bei 25°C mit einem Härteprüfer Typ A nach JIS K 6253-1 gemessen ist.

2. Luftreifen nach Anspruch 1, wobei der Luftreifen einen oder zwei leitende Gummis umfasst, die durchgehend in einer Umfangsrichtung des Reifens vorgesehen sind und eine Breite von 0,1 bis 2,5 mm in einer axialen Richtung des Reifens aufweisen.

**Revendications**

1. Bandage pneumatique, comprenant :

une bande de roulement formant coiffe ; et

un caoutchouc conducteur disposé de manière à être exposé sur une surface de la bande de roulement,

la bande de roulement formant coiffe étant formée d'une composition de caoutchouc pour bande de roulement formant coiffe qui comprend, pour 100 parties en masse d'un composant de caoutchouc, 60 à 110 parties en masse de silice et 0,5 à 3,0 parties en masse de soufre,

la composition de caoutchouc pour bande de roulement formant coiffe ayant, lorsqu'elle est vulcanisée, une dureté de 68 ou plus et une tan $\delta$ de 0,20 à 0,35 à 30° C,

le caoutchouc conducteur étant formé d'une composition de caoutchouc pour caoutchouc conducteur qui comprend, pour 100 parties en masse d'un composant de caoutchouc, 50 à 85 parties en masse de fines particules de noir de carbone ayant une superficie spécifique d'adsorption d'azote de 105 m$^2$/g ou plus et 1,8 à 3,0 parties en masse de soufre,

la composition de caoutchouc pour caoutchouc conducteur ayant, lorsqu'elle est vulcanisée, une dureté de 68 ou plus et présente une différence par rapport à la dureté de la composition de caoutchouc vulcanisé pour bande de roulement formant coiffe qui est au maximum de 2,0, dans lequel

la dureté du caoutchouc conducteur et du caoutchouc pour bande de roulement est mesurée à 25° C en utilisant un duromètre de type A en accord avec la norme JIS K 6253-1.

2. Bandage pneumatique selon la revendication 1,
dans lequel le bandage pneumatique comprend un ou deux caoutchoucs conducteurs prévus en continu dans une direction circonférentielle du pneumatique et ayant une largeur de 0,1 à 2,5 mm dans une direction axiale du pneumatique.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140326386 A1

- JP 2944908 B